# EUROPEAN PATENT SPECIFICATION

(11) **EP 1 874 121 B1**
(45) Date of publication and mention of the grant of the patent: **02.11.2011**
(21) Application number: 06722870.0
(22) Date of filing: 29.03.2006
(51) Int. Cl.: A22B 5/00

(54) **METHOD, APPARATUS AND KNIFE FOR AUTOMATICALLY CUTTING OUT A JOWL OF A CARCASS**
VERFAHREN, VORRICHTUNG UND MESSER ZUM AUTOMATISCHEN HERAUSSCHNEIDEN EINER WANGE AUS EINEM TIERKÖRPER
PROCÉDÉ, APPAREIL ET COUTEAU POUR LA DÉCOUPE AUTOMATIQUE D'UNE BAJOUE D'UNE CARCASSE

(30) Priority: 30.03.2005 DK 200500435
(43) Date of publication of application: 09.01.2008
(73) Proprietor: Teknologisk Institut, 2630 Taastrup (DK)
(72) Inventor: JENSEN, Niels, R., 2900 Hellerup (DK)
(74) Representative: Joergensen, Bjoern Barker
(86) International application number: PCT/DK2006/000177
(87) International publication number: WO 2006/102897

(56) References cited:
- EP-A- 0 197 615
- EP-A1- 1 023 840
- EP-B1- 0 567 188
- EP-B1- 1 135 988
- WO-A-2005/094593
- WO-A1-94/02024
- WO-A1-03/096814
- US-A- 4 237 580

## Description

The invention relates to a method for automatically cutting out a jowl of a suspended carcass, wherein an elongated, sharp-pointed knife held by a moving device at the rear of the knife is stuck into the rind from the back of the carcass near one ear of the carcass with the knife at an acute angle relative to a vertical median plane in the carcass and through the carcass; and the knife making a cut is moved towards the front end of the carcass. The invention also relates to an apparatus for automatically cutting out a jowl of a suspended carcass, comprising an elongated, sharp-pointed knife, a moving device for the knife, and a retaining device for a carcass.

EP-A-1 135 988 discloses equipment and a method for automatically cutting out the jowl of a carcass as mentioned above. Different embodiments are disclosed, of which one comprises the use of an elongated, transverse to the blade, in the longitudinal direction of the blade curving knife, which is led via a correspondingly curved path through the rind of the carcass from a position near the ear and through the meat, and which is then led downwards making a cut resulting in cut-out of the jowl. During the downward movement, it is possible to move the knife in an oscillating curve movement corresponding to the curve movement during insertion, i.e. corresponding to the curve of the knife. Viewed from the carcass, such an oscillating movement will be seen as if the knife has a fixed angular position in the horizontal plane as the angle of the knife at a given place in the carcass is not changed by the movement. Alternatively, two knives are used, each making a straight cut from the back and from the ventral side of the carcass, respectively. The document states that this results in cuts that are simpler to make than the first mentioned curved cut.

The object of the present invention is to provide a method and an apparatus for cutting out jowls, wherein only one knife is used per jowl, and wherein the cut out jowl becomes big with a lot of meat.

This is achieved with the method of the invention, which is **characterized in that** the knife, before and/or during this movement, is turned to one or more other positions with the knife at another angle, or other angles, whereby the longitudinal direction of the knife, at a place where the knife is engaged in the carcass, is turned to another angle relative to the vertical median plane when the knife is turned.

By turning the knife during cutting, relatively complicated cutting geometries can be achieved, even with one knife per jowl, e.g. a knife with rectilinear longitudinal axis.

Preferably, the knife is stuck into the rind from the back of the carcass between the ear and the eye.

The knife preferably oscillates in its longitudinal direction during movement towards the front end of the carcass. In so doing, the knife cuts better as is commonly known.

The knife is preferably held at an angle of 5-35° relative to a horizontal plane, i.e. pointing obliquely upwards with the longitudinal direction askew relative to the horizontal, preferably pointing upwards at a fixed acute angle to the horizontal plane. The fixed angle helps achieve a relatively simple pattern of movement for the knife.

The knife is preferably turned to a smaller angle relative to the vertical median plane at or after the stick-through and/or during part of the movement towards the front end. Preferably, after being turned to a smaller angle, the knife retains the smaller angle relative to the median plane over part of the movement towards the front end. During the last part of the movement towards the front end, the knife is preferably turned to a larger angle relative to the median plane. These measures help achieve a bigger cut out jowl.

During the movement towards the front end of the carcass, the knife is preferably pushed sideways in the direction of the vertical median plane. In so doing, the knife is pushed against and guided by the cranium of the carcass, which helps achieve a cut corresponding to the geometry of the carcass.

During stick-through, the knife is preferably led in its longitudinal direction.

During insertion of the knife, a penetration of rind and meat in the throat region of the carcass in or near the median plane is preferably carried out. Rind and meat in the breast and throat region may be cut through in the median plane of the carcass prior to the jowl cut-out in connection with another step in a slaughter process, in which case the knife passes out through an existing cut, or the knife may cut through the rind and the meat in the throat region, i.e. on the ventral side of the carcass.

The cut surface in the throat region of the carcass at the jowl to be cut out, and/or the underlying internal sides of the carcass, is preferably pushed away from the vertical median plane during the cut-out. In so doing, more meat is pulled to the jowl, which is cut out, thus making it bigger.

Preferably, a pushing means inside the carcass abuts one or more fixed portions in the head and/or the neck, preferably processus paracondylaris, and the outside of the head, if necessary, is supported by an abutment element, and/or the lower jaw is gripped by a gripping element. The head of the carcass is thus retained, and a more precise cut with respect to what was intended may be achieved.

Preferably, the position of insertion of the knife into the rind is determined relative to the position of abutment of the pushing means. This conveniently determines the correct place for inserting the knife.

The object is also achieved with an apparatus of the type stated at the outset, which is **characterized in that** the moving device is adapted for holding the knife at an acute angle relative to a vertical median plane in the carcass being held by the retaining device and for moving the knife in the direction of the tip; and in that the moving device is also adapted for turning the knife to one or more other angular positions so that the longitudinal direction of the knife, at a place where the knife is engaged in the carcass, is turned to another angle relative to the vertical median plane when the knife is turned.

By adapting the moving device as stated, relatively complicated cutting geometries can be achieved, even with one knife.

In a preferred embodiment, the moving device has means for controllable movement of the rear of the knife with three degrees of freedom as well as means for causing a turn of the knife to other angles relative to the median plane and an oscillating movement in the longitudinal direction of the knife. The knife may thus be displaced as desired in the space and turned to the desired angles relative to the median plane as well as make cutting movements to and fro.

The means for causing a turn of the knife to other angles relative to the median plane may comprise or consist of the knife being mounted in such a way in the moving device that it can be freely turned around an axis against a force from a return force means pushing the knife against a stop position with a maximum, acute angle. The knife will thus turn if, e.g. during use, it is pushed against the cranium of a carcass, whereby the knife, so to speak, will roll on the cranium.

The retaining device preferably comprises a pushing means for abutting one or more fixed portions in the head and/or neck inside the carcass, preferably processus paracondylaris, as well as an abutment element, if necessary, for supporting the outside of the head, and/or a gripping element for the lower jaw. The head may thus be fixed during cut-out, and a more precise cut with respect to what was intended may be achieved. A gripping element for the lower jaw is known per se from the above mentioned EP-A-1 135 988.

The apparatus preferably comprises means for determining the position of the pushing means, and a control device is preferably provided, which device is adapted for controlling the moving device depending on the position of the pushing means. This conveniently provides a means for determining the correct place for inserting the knife.

The apparatus preferably comprises dilating means for insertion into a neck cut in a carcass held by the retaining device, and for pushing the cut surfaces in the neck cut and/or the underlying internal sides of the carcass away from the vertical median plane. In so doing, more meat can be pulled to a jowl, which is cut out, thus making it bigger.

Preferably, the knife is mainly shaped as an elongated cylinder surface bevelled between the cutting edge and the convex blade side. Such a knife can be led with the cutting edge close to the cranium without the risk of cutting into it.

The knife preferably has an essentially rectilinear longitudinal axis and preferably an essentially rectilinear cutting edge. The pattern of movement during use may thus be particularly simple, and manufacture of the knife may also be very simple.

The knife is preferably mounted in the moving device pointing obliquely upwards at a fixed, preferably adjustable angle of 5-35° relative to the horizontal.

In the following, the invention will be explained in more detail by means of an embodiment with reference to the schematical drawings, in which
Fig. 1 shows parts of an apparatus for cutting out jowls of a suspended pig carcass;
Fig. 2 shows a section along the line II-II in Fig. 1;
Fig. 3 shows a side view of a stamping and dilating device;
Fig. 4 shows a perspective view of a portion of the stamping device;
Fig. 5 shows a plan view of the cutting-out portion of the apparatus with a moving device and cutting-out knifes;
Fig. 6 shows a side view of the moving device in Fig. 6;
Fig. 7 shows a section through a cutting-out knife along the line VII-VII in Fig. 6;
Fig. 7a shows a perspective view of the knife seen askew from the front showing the convex side of the knife;
Fig. 7b shows a perspective view of the knife seen askew from the front, showing the opposite side compared to Fig. 7a;
Fig. 7c shows a perspective view of the knife seen from the tip; and
Fig. 7d shows a view of the knife seen from the concave side.

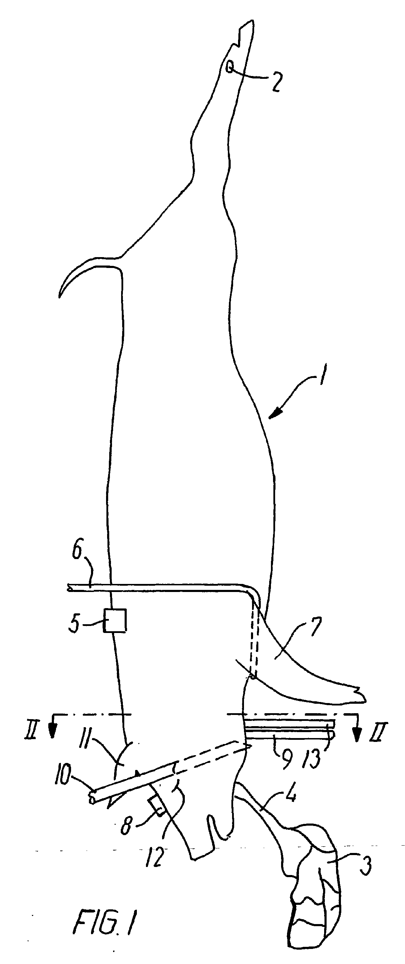

Fig. 1 shows the left side of a pig carcass 1 suspended in the hind legs in a way known per se, e.g. in a gambrel 2 stuck through the hind feet. The carcass is at a stage in the slaughter line where the belly, the breast and part of the neck is cut open, and intestines and part of the plucks set (e.g. stomach, diaphragm and liver) are removed. The plucks set or a remaining part 3 thereof (e.g. comprising lungs and heart) are still connected to the carcass via the windpipe and cullet 4, but have been pulled away from the carcass by means of a shovel tool that closes behind the heart and lungs but allows the passage of windpipe and gullet 4 in a groove, cf. W02005094593 (Danish Meat Research Institute).

The carcass is fixed by means of a back support 5 and shackles 6 that grip the front legs 7 and pull towards the back support 5. This also provides an increased opening of the chest opening.

The head of the carcass is also fixed by means of a vertical, self-adapting forehead support 8 that adjusts itself according to the anatomy of the body, and a pushing or stamping device 9, which pushes against the cranium inside the carcass, as will be explained in more detail below. The pushing and stamping device first and foremost serves to improve accessibility for a tool which is to loosen the throat area from the inner side of the neck after cut-out with a view to removing pluck set, windpipe/gullet and tongue as a whole from the carcass, cf. the above mentioned WO2005094593. The operation of the cutting-out process is disclosed below.

With a view to cutting out the jowl, a knife 10 is stuck through the rind of the carcass in the area between the ear 11 and the eye 12.

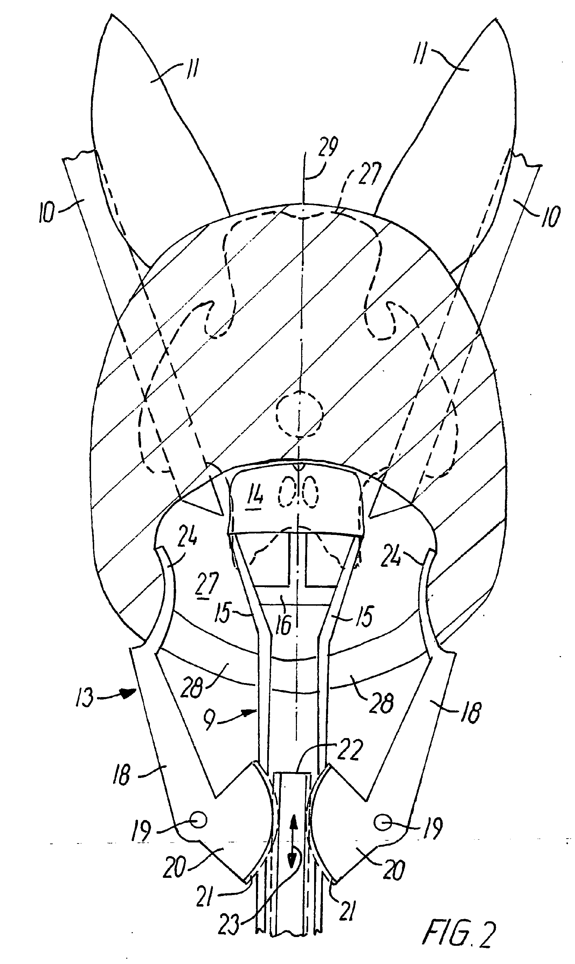

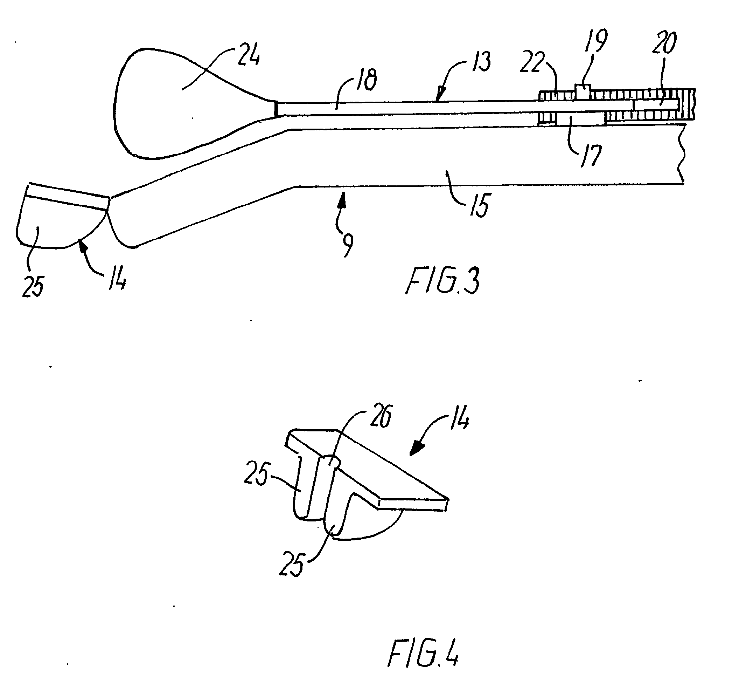

The pushing or stamping device 9 is shown in more detail in Figs. 2 to 4. It is integral with a dilating device 13. The pushing or stamping device 9 comprises a pushing head 14, which is shown in perspective in Fig. 4. The pushing head 14 is carried by arms 15 that are connected with a moving device (not shown) for the pushing, stamping and dilating devices. Furthermore, there is a T-shaped reinforcement 16 between the arms 15 themselves and the pushing head 14.

A traverse 17 on the arms 15 carries two dilating arms 18 that are hinged by means of pivots 19 with vertical axes. The dilating arms 18 have segments 20 with peripheral toothing 21 which are engaged in a rack 22 with double sided toothing. By moving the rack 22 in its longitudinal direction 23, the dilating arms 18 will correspondingly be turned to or from one another. At their ends opposite to the segments 20, the dilating arms 18 are provided with abutment plates 24.

The pushing head 14 is shaped with projections 25 on its underside and with a recess 26 in its front end. The pushing head 14 pushes against the cranium 27 of the carcass 1, as shown with a broken line in Fig. 2. With the shown location of the pushing head 14, the push is made against processus paracondylaris.

Fig. 2 shows the upper portion of the thoracic cavity 27 in the throat region of the carcass and the cut surfaces 28 from cutting the chest and a portion of the neck.

The dilating device 13 is inserted into the opening with the dilating arms 18 turned towards each other. Subsequently, the dilating arms 18 are turned away from each other to the position shown in Fig. 2 where the abutment plates 24 push against the cut surfaces 28 and the underlying internal sides of the carcass 1, which are thus pushed away from the vertical and/or longitudinal median plane 29 of the carcass.

Contrary to Fig. 1, Fig. 2 shows both knives 10, which can be led symmetrically with respect to the vertical median plane 29 of the carcass by means of their moving device, which is described in more detail below; however, it should be noted that the knives 10 in Fig. 2 are not shown inserted as deeply as in Fig.1.

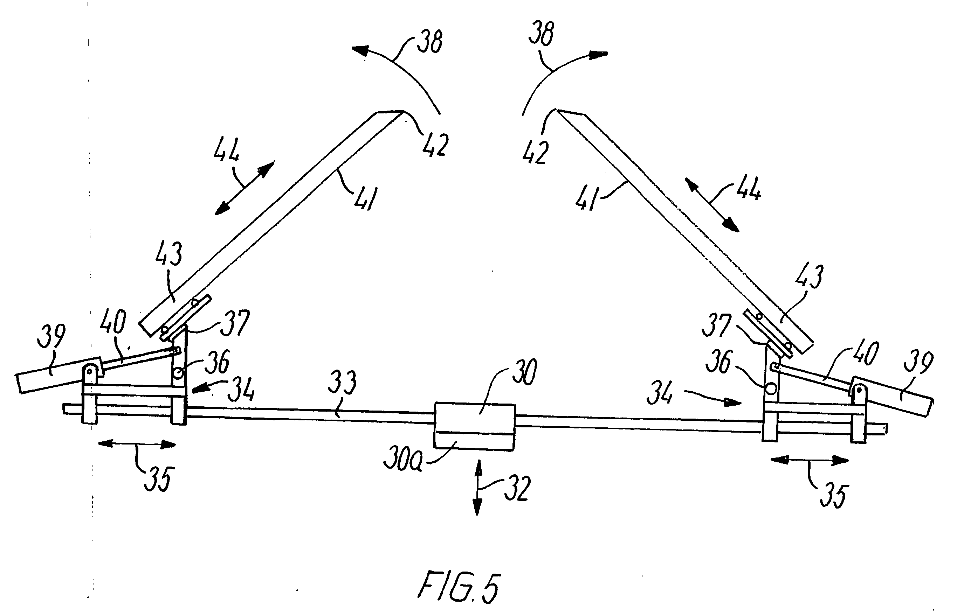

Figs. 5 to 7 show the knives 10 and their moving device. This comprises a carrier 30, which can be controllably moved in a vertical direction, as shown with a double arrow 31, along a holder 30a, which in turn can be controllably moved to and fro in the direction of the carcass, as shown with another double arrow 32. The carrier 30 caries two slide rails 33, which mirror symmetrically and slidably carry two slides 34 that can be controllably displaced on the rails 33 as indicated by the double arrows 35. Power means (not shown) for bringing about the mentioned, possible movement and a control device (not shown) for automatically controlling the power means and thus the movements is provided.

Each slide 34 pivotally carries a knife holder 37 around a vertical axis 36. This holder may be turned, as indicated with arrows 38, around the axis 36 from a preferably adjustable stop (not shown) against a spring force, which is provided by a one-sidedly affected pneumatic cylinder 39 with a piston rod 40 in the shown embodiment.

The knife holder 37 carries the knife 10. In the shown embodiment, this is essentially rectilinear with a rectilinear cutting edge 41 and a tip 42. At its rear 43, the knife 10 is displaceably mounted in its longitudinal direction, shown with a double arrow 44, whereby an oscillating, to-and-fro movement relative to the knife holder 37 can be imparted to the knife by means of a power means (not shown). In the embodiment the knife 10 is carried by the knife holder 37 with a fixed angle relative to the horizontal.

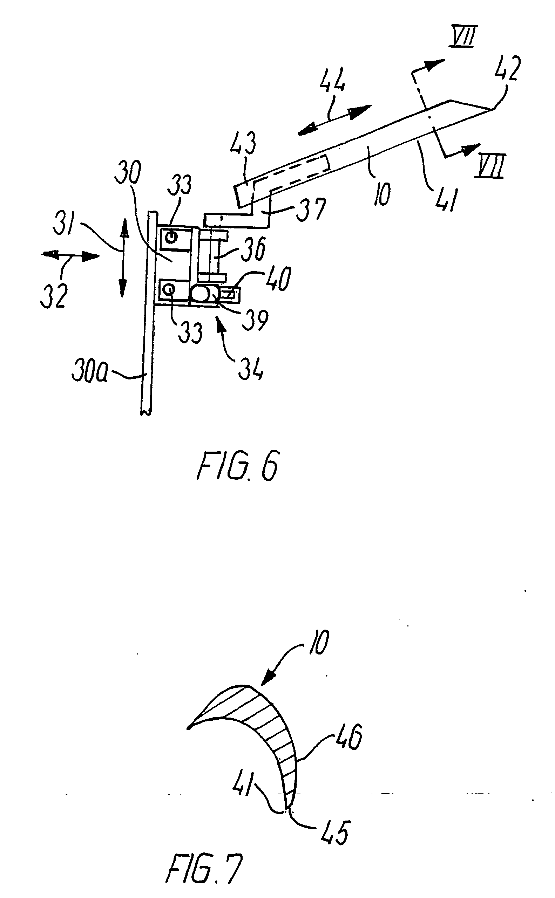

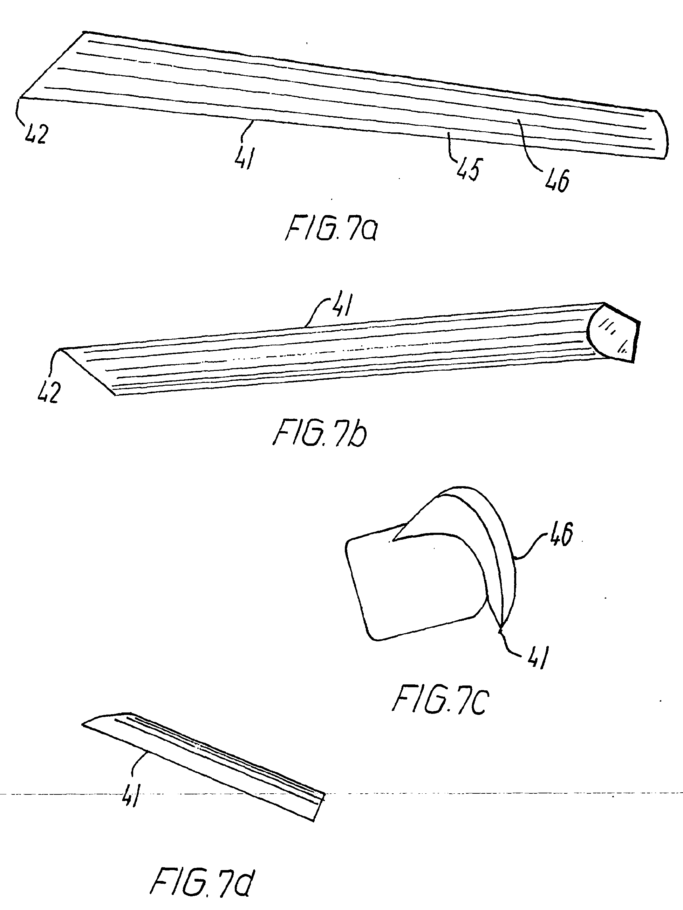

In the embodiment, the knife 10 is shaped as an elongated cylinder surface and has the cross section shown in Fig. 7. At the cutting edge 41, the knife is bevelled 45 so that the cutting edge 41 has a distance from the adjacent convex blade side 46 that is closest to the cranium of the carcass during use.

Cutting out jowls is done in the following way:
The carcass 1 is fixed as shown and described above with reference to Figs. 1 and 2. A means (not shown) establishes the vertical position of the pushing head 14 in abutment inside the carcass. The knives 10 are brought to a starting position, in which they are turned towards each other by the cylinders 39 as far as allowed by the stops (not shown), and they have a predetermined mutual distance, achieved by displacing the slides 34 in the direction of the double arrows 35. The carrier 30 is moved to a vertical position determined on the basis of the vertical position of the pushing head 14, and the carrier 30 is led towards the carcass 1 to a position determined on the basis of the position of the forehead support 8, so that the tips 42 of the knives are in position in the area between right and left ear 11 and eye 12, respectively. The carrier 30 and the slides 34 are then at the same time moved in the direction of the respective double arrows 31, 32 and 35, so that the knives are led in their respective longitudinal direction into the rind of the carcass and through the meat until they reach the position shown in Fig. 2, and further on until they reach the position shown in Fig. 1, whereby the tips 42 of the knives 10 poke through rind and meat in the throat region between the cut surfaces 28.

The knives are made to oscillate in the direction of the double arrows 44. The carrier 30 is lowered in the direction of the double arrow 31, whereby the knives are led down towards the front end of the carcass, each making a cut. The slides 34 are led towards each other in the direction of the double arrows 35. The knives are thereby brought against the cranium which stops them, so that further movement of the slides 34 towards each other results in the knives 10 turning against the force from the cylinders 39 in the direction of the arrows 38 and assuming a smaller angle, preferably at least 10° smaller, relative to the vertical median plane 29 of the carcass 1. During this turn, the knives 10 roll on the cranium. The shape of the knife helps to pull the cheek meat away from the cranium during cutting. The smaller angle, which can be close to zero, is maintained for a while, after which the slides are once again pushed away from each other at the end of cutting so that the knives once again assume larger angles relative to the vertical median plane 29. The carrier 30 is led so far down that the jowls are detached from the head, after which the carrier with the knives is removed from the carcass to once again assume the starting position, ready for the next carcass.

By making the knives 10 turn in the horizontal plane, as described, it is possible to avoid projections on the cranium and the jaw cutting edges 41 of the knives 10 so that the cut out jowls become bigger than usual.

With the cross section of the knife or the knife blade shown in fig. 7 many advantages are achieved. As mentioned, the bevelling 45 results in the cutting edge 41 having a certain (small) distance to the cranium, which the convex blade side 46 leans against. This means that a lot of meat can be cut free without the cutting edge 41 engaging the cranium. The convex shape of the convex blade side 46 further results in the fact that the point of engagement between said blade side and the cranium is never far from the cutting edge 41, which means that cutting can be done close to the cranium so that a lot of meat can be cut off. The shape of the knife further causes the just loosened portion of the meat to be pushed away from the cranium in such a way that the knife itself supports the above mentioned effect of the dilating arms 18 and contributes to loosening more meat.

## Claims

1. A method for automatically cutting out a jowl of a suspended carcass, wherein an elongated, sharp-pointed knife (10) held by a moving device at the rear of the knife is stuck into the rind from the back of the carcass near one ear (11) of the carcass with the knife (10) at an acute angle relative to a vertical median plane (29) in the carcass (1) and through the carcass (1); and the knife making a cut is moved towards the front end of the carcass; **characterized in that** the knife (10), before and/or during this movement, is turned relative to the moving device to one or more other positions with the knife at another angle, or other angles; whereby the longitudinal direction of the knife, at a place where the knife is engaged in the carcass, is turned to another angle relative to the vertical median plane (29) when the knife is turned.

2. A method as claimed in claim 1, wherein the knife (10) is stuck into the rind from the back of the carcass between the ear and the eye.

3. A method as claimed in claim 1 or 2, wherein the knife (10) oscillates in its longitudinal direction during the movement towards the front end of the carcass.

4. A method as claimed in any one of claims 1 to 3, wherein the knife (10) is also held at an angle of 5-35° to the horizontal and pointing obliquely upwards, preferably pointing up at a fixed acute angle to the horizontal plane.

5. A method as claimed in any one of claims 1 to 4, wherein the knife (10) is turned to a smaller angle relative to the vertical median plane (29) at or after the stick-through and/or during part of the movement towards the front end.

6. A method as claimed in claim 5, wherein the knife (10), after being turned to a smaller angle, retains the smaller angle relative to the median plane over part of the movement towards the front end.

7. A method as claimed in any one of claims 1 to 6, wherein the knife (10) is turned to a larger angle relative to the median plane during the last part of the movement towards the front end.

8. A method as claimed in any one of claims 1 to 7, wherein the knife (10) is pushed sideways in the direction of the vertical median plane (29) during the movement towards the front end of the carcass.

9. A method as claimed in any one of claims 1 to 8, wherein the knife (10) is led in its longitudinal direction during the stick-through.

10. A method as claimed in any one of claims 1 to 9, wherein, during insertion of the knife (10), rind and meat is penetrated in the throat region of the carcass in or near the median plane.

11. A method as claimed in claim 10, wherein the cut surface (28) in the throat region of the carcass at the jowl to be cut out, and/or the underlying internal sides of the carcass, are pushed away from the vertical median plane (29) during the cut-out.

12. A method as claimed in claim 10 or 11, wherein pushing means (9, 14) inside the carcass (1) abut one or more fixed portions in the head and/or neck, preferably processus paracondylaris, and the outside of the head, if necessary, is supported by an abutment element, and/or the lower jaw is gripped by a gripping element.

13. A method as claimed in claim 12, wherein the position of the insertion of the knife (10) into the rind is determined relative to the position of the abutment of the pushing means (9, 14).

14. An apparatus for automatically cutting out a jowl of a suspended carcass (1), comprising an elongated, sharp-pointed knife (10), a moving device (30-34) for the knife, said moving device holding the knife at its rear end, and a retaining device (2, 5, 6, 8, 9) for a carcass; **characterized in that** the moving device (30-34) is adapted for holding the knife (10) at an acute angle relative to a vertical median plane (29) in the carcass being held by the retaining device (2, 5, 6, 8, 9) and for moving the knife in the direction of the tip; and the moving device is also adapted for turning the knife relative to the moving device to one or more other angular positions so that the longitudinal direction of the knife (10), at a place where the knife is engaged in the carcass, is turned to another angle relative to the vertical median plane (29) when the knife is turned.

15. An apparatus as claimed in claim 14, wherein the moving device has means for controllable movement of the rear of the knife with three degrees of freedom (31, 32, 35) as well as means for causing a turn (38) of the knife relative to the moving device to other angles relative to the median plane and an oscillating movement in the longitudinal direction (44) of the knife.

16. An apparatus as claimed in claims 14 or 15, wherein the knife (10) is mounted in the moving device in such a way that it can be freely turned around an axis (36) against a force from a return force means (39) pushing the knife against a stop position with a maximum, acute angle.

17. An apparatus as claimed in any one of claims 14 to 16, wherein the retaining device comprises a pushing means (9, 14) for abutting one or more fixed portions in the head and/or neck inside the carcass, preferably processus paracondylaris, as well as an abutment element (8), if necessary, for supporting the outside of the head, and/or a gripping element for the lower jaw.

18. An apparatus as claimed in claim 17, comprising means for determining the position of the pushing means (9, 14), and whereby a control device is provided, which device is adapted for controlling the moving device depending on the position of the pushing means.

19. An apparatus as claimed in any one of claims 14 to 18, comprising dilating means (13) for insertion into a neck cut in a carcass held by the retaining device, and for pushing the cut surfaces (28) in the neck cut and/or the underlying internal sides of the carcass away from the vertical median plane.

20. An apparatus as claimed in any one of claims 14 to 19, wherein the knife (10) is mainly shaped as an elongated cylinder surface bevelled (45) between the cutting edge (41) and the convex blade side (46).

21. An apparatus as claimed in any one of claims 14 to 20, wherein the knife (10) has an essentially rectilinear longitudinal axis and preferably an essentially rectilinear cutting edge (41).

22. An apparatus as claimed in any one of claims 14 to 21, wherein the knife (10) is mounted in the moving device pointing obliquely upwards at a fixed, preferably adjustable angle of 5-35° relative to the horizontal.

## Patentansprüche

1. Verfahren zum automatischen Herausschneiden einer Backe aus einem aufgehängten Schlachttierkörper, wobei ein längliches Messer (10) mit scharfer Spitze, das am hinteren Ende des Messers von einer sich bewegenden Einrichtung gehalten wird, von der Rückseite des Schlachttierkörper nahe einem Ohr (11) des Schlachttierkörpers in die Schwarte, wobei sich das Messer (10) in einem spitzen Winkel relativ zu einer vertikalen Mittelebene (29) in dem Schlachttierkörper (1) befindet, und durch den Schlachttierkörper gestochen wird; und wobei das einen Schnitt ausführende Messer zum Vorderende des Schlachttierkörpers hin bewegt wird; **dadurch gekennzeichnet, dass** das Messer (10) vor und/oder während dieser Bewegung relativ zu der sich bewegenden Einrichtung in eine oder mehrere andere Positionen gedreht wird, wobei sich das Messer in einem anderen Winkel oder anderen Winkeln befindet, wodurch die Längsrichtung des Messers an einem Ort, an dem das Messer mit dem Schlachttierkörper in Eingriff steht, relativ zu der vertikalen Mittelebene (29) in einen anderen Winkel gedreht wird, wenn das Messer gedreht wird.

2. Verfahren nach Anspruch 1, wobei das Messer (10) von der Rückseite des Schlachttierkörpers zwischen dem Ohr und dem Auge in die Schwarte gestochen wird.

3. Verfahren nach Anspruch 1 oder 2, wobei das Messer (10) während der Bewegung auf das Vorderende des Schlachttierkörpers zu in seiner Längsrichtung oszilliert.

4. Verfahren nach einem der Ansprüche 1 bis 3, wobei das Messer (10) auch in einem Winkel von 5-35° zur Horizontalen und nach oben zeigend gehalten wird, vorzugsweise in einem festen spitzen Winkel zur horizontalen Ebene nach oben zeigend.

5. Verfahren nach einem der Ansprüche 1 bis 4, wobei das Messer (10) bei oder nach dem Durchstich und/oder während eines Teils der Bewegung auf das Vorderende zu in einen kleineren Winkel relativ zur vertikalen Mittelebene (29) gedreht wird.

6. Verfahren nach Anspruch 5, wobei das Messer (10), nachdem es in einen kleineren Winkel gedreht wurde, den kleineren Winkel relativ zu der Mittelebene über einen Teil der Bewegung auf das Vorderende zu beibehält.

7. Verfahren nach einem der Ansprüche 1 bis 6, wobei das Messer (10) während des letzten Teils der Bewegung auf das Vorderende zu in einen größeren Winkel relativ zur Mittelebene gedreht wird.

8. Verfahren nach einem der Ansprüche 1 bis 7, wobei das Messer (10) während der Bewegung auf das Vorderende des Schlachttierkörpers zu seitwärts in Richtung der vertikalen Mittelebene (29) gedrückt wird.

9. Verfahren nach einem der Ansprüche 1 bis 8, wobei das Messer (10) während des Durchstichs in seiner Längsrichtung gefühl wird.

10. Verfahren nach einem der Ansprüche 1 bis 9, wobei Schwarte und Fleisch während des Einführens des Messers (10) im Kehlbereich des Schlachttierkörpers in oder nahe der Mittelebene durchdrungen werden.

11. Verfahren nach Anspruch 10, wobei die geschnittene Oberfläche (28) im Kehlbereich des Schlachttierkörpers an der herauszuschneidenden Backe und/oder die darunterliegenden inneren Seiten des Schlachttierkörpers während des Herausschneidens von der vertikalen Mittelebene (29) weggedrückt werden.

12. Verfahren nach Anspruch 10 oder 11, wobei Druckmittel (9, 14) in dem Schlachttierkörper (1) an einem oder mehreren festen Abschnitten in dem Kopf und/oder Hals anliegen, vorzugsweise am Processus paracondylaris, und die Außenseite des Kopfes, wenn nötig, durch ein Anlageelement gestützt wird und/oder der Unterkiefer durch ein Greifelement gegriffen wird.

13. Verfahren nach Anspruch 12, wobei die Einführposition des Messers (10) in die Schwarte relativ zu der Anlageposition des Druckmittels (9, 14) bestimmt wird.

14. Vorrichtung zum automatischen Herausschneiden einer Backe aus einem aufgehängten Schlachttierkörper (1), umfassend ein längliches Messer (10) mit scharfer Spitze, eine sich bewegende Einrichtung (30-34) für das Messer, wobei die sich bewegende Einrichtung das Messer an seinem hinteren Ende hält, und eine Halteeinrichtung (2, 5, 6, 8, 9) für einen Schlachttierkörper; **dadurch gekennzeichnet, dass** die sich bewegende Einrichtung (30-34) eingerichtet ist, um das Messer (10) in einem spitzen Winkel relativ zu einer vertikalen Mittelebene (29) in dem von der Halteeinrichtung (2, 5, 6, 8, 9) gehaltenen Schlachttierkörper zu halten und um das Messer in der Richtung der Spitze zu bewegen; und dass die sich bewegende Einrichtung auch eingerichtet ist, um das Messer relativ zu der sich bewegenden Einrichtung in eine oder mehrere andere Winkelpositionen zu drehen, so dass die Längsrichtung des Messers an einem Ort, an dem das Messer mit dem Schlachttierkörper in Eingriff steht, relativ zu der vertikalen Mittelebene (29) in einen anderen Winkel gedreht wird, wenn das Messer gedreht wird.

15. Vorrichtung nach Anspruch 14, wobei die sich bewegende Einrichtung Mittel zur steuerbaren Bewegung des hinteren Teils des Messers mit drei Freiheitsgraden (31, 32, 35) sowie Mittel zum Bewirken einer Drehung (38) des Messers relativ zu der sich bewegenden Einrichtung in andere Winkel relativ zu der Mittelebene und einer oszillierenden Bewegung in der Längsrichtung (44) des Messers aufweist.

16. Vorrichtung nach Anspruch 14 oder 15, wobei das Messer (10) derart in der sich bewegenden Einrichtung angebracht ist, dass es gegen eine Kraft von einem Rückstellkraftmittel (39), das das Messer mit einem maximalen spitzen Winkel gegen eine Halteposition drückt, frei um eine Achse (36) gedreht werden kann.

17. Vorrichtung nach einem der Ansprüche 14 bis 16, wobei die Halteeinrichtung ein Druckmittel (9, 14) zum Anliegen an einen oder mehrere feste Abschnitte in dem Kopf und/oder Hals in dem Schlachttierkörper, vorzugsweise den Processus paracondylaris, sowie, wenn nötig, ein Anliegeelement (8) zum Stützen der Außenseite des Kopfes und/oder ein Greifelement für den Unterkiefer umfasst.

18. Vorrichtung nach Anspruch 17, umfassend Mittel zum Bestimmen der Position des Druckmittels (9, 14), wodurch eine Steuereinrichtung vorgesehen ist, wobei die Einrichtung zum Steuern der sich bewegenden Einrichtung abhängig von der Position des Druckmittels eingerichtet ist.

19. Vorrichtung nach einem der Ansprüche 14 bis 18, umfassend Aufweitungsmittel (13) zum Einführen in einen Halsschnitt in einem Schlachttierkörpcr, der von der Halteeinrichtung gehalten wird, und zum Schieben der geschnittenen Oberflächen (28) in dem Halsschnitt und/oder den darunterliegenden inneren Seiten des Schlachttierkörpers weg von der vertikalen Mittelebene.

20. Vorrichtung nach einem der Ansprüche 14 bis 19, wobei das Messer (10) im Wesentlichen als längliche Zylinderoberfläche geformt ist, die zwischen dem Schneidrand (41) und der konvexen Klingenseite (46) abgeschrägt ist.

21. Vorrichtung nach einem der Ansprüche 14 bis 20, wobei das Messer (10) eine im Wesentlichen geradlinige Längsachse und vorzugsweise einen im Wesentlichen geradlinigen Schneidrand (41) aufweist.

22. Vorrichtung nach einem der Ansprüche 14 bis 21, wobei das Messer (10) in der sich bewegenden Einrichtung in einem festen, vorzugsweise einstellbaren Winkel von 5-35° relativ zur Horizontalen schräg nach oben zeigend angebracht ist.

## Revendications

1. Procédé pour découper automatiquement une bajoue d'une carcasse suspendue, dans lequel un couteau allongé à pointe tranchante (10) maintenu par un dispositif mobile à l'arrière du couteau est enfoncé dans la couenne à partir du dos de la carcasse à proximité d'une oreille (11) de la carcasse avec le couteau (10) positionné en angle aigu par rapport à un plan médian vertical (29) dans la carcasse (1) et à travers la carcasse (1); et le couteau pratiquant une découpe est déplacé vers l'extrémité avant de la carcasse; **caractérisé en ce que** le couteau (10), avant et/ou pendant ce mouvement, est pivoté par rapport au dispositif mobile vers une ou plusieurs autres positions avec le couteau à un autre angle ou d'autres angles; moyennant quoi la direction longitudinale du couteau, à l'emplacement où le couteau est mis en prise dans la carcasse, est pivotée selon un autre angle par rapport au plan médian vertical (29) lorsque le couteau est pivoté.

2. Procédé selon la revendication 1, dans lequel le couteau (10) est enfoncé dans la couenne à partir du dos de la carcasse entre l'oreille et l'oeil.

3. Procédé selon la revendication 1 ou 2, dans lequel le couteau (10) oscille dans sa direction longitudinale pendant le mouvement vers l'extrémité avant de la carcasse.

4. Procédé selon l'une quelconque des revendications 1 à 3, dans lequel le couteau (10) est également maintenu selon un angle de 5 à 35° par rapport à l'horizontale et orienté obliquement vers le haut, de préférence orienté selon un angle aigu fixe par rapport au plan horizontal.

5. Procédé selon l'une quelconque des revendications 1 à 4, dans lequel le couteau (10) est pivoté selon un plus petit angle par rapport au plan médian vertical (29) lors ou après l'enfoncement et/ou pendant une partie du mouvement vers l'extrémité avant.

6. Procédé selon la revendication 5, dans lequel le couteau (10), après avoir été pivoté selon un plus petit angle, conserve le plus petit angle par rapport au plan médian sur une partie du mouvement vers l'extrémité avant.

7. Procédé selon l'une quelconque des revendications 1 à 6, dans lequel le couteau (10) est pivoté selon un plus grand angle par rapport au plan médian pendant la dernière partie du mouvement vers l'extrémité avant.

8. Procédé selon l'une quelconque des revendications 1 à 7, dans lequel le couteau (10) est poussé latéralement dans la direction du plan médian vertical (29) pendant le mouvement vers l'extrémité avant de la carcasse.

9. Procédé selon l'une quelconque des revendications 1 à 8, dans lequel le couteau (10) est dirigé dans sa direction longitudinale pendant l'enfoncement.

10. Procédé selon l'une quelconque des revendications 1 à 9, dans lequel, pendant l'insertion du couteau (10), la couenne et la viande sont pénétrées dans la région de la gorge de la carcasse dans ou à proximité du plan médian.

11. Procédé selon la revendication 10, dans lequel la surface de coupe (28) dans la région de la gorge de la carcasse au niveau de la bajoue à découper, et/ou les côtés internes sous-jacents de la carcasse, sont éloignés du plan médian vertical (29) pendant la découpe.

12. Procédé selon la revendication 10 ou 11, dans lequel des moyens de butée (9, 14) à l'intérieur de la carcasse (1) viennent en butée contre une ou plusieurs parties fixes dans la tête et/ou le cou, de préférence l'apophyse paracondylaire, et l'extérieur de la tête, si nécessaire, est supporté par un élément de butée, et/ou la mâchoire inférieure est accrochée par un élément de préhension.

13. Procédé selon la revendication 12, dans lequel la position d'insertion du couteau (10) dans la couenne est déterminée par rapport à la position de la butée des moyens de poussée (9, 14).

14. Appareil pour découper automatiquement une bajoue d'une carcasse suspendue (1), comprenant un couteau allongé à pointe tranchante (10), un élément mobile (30-34) pour le couteau, ledit dispositif mobile maintenant le couteau au niveau de sa partie arrière, et un dispositif de retenue (2, 5, 6, 8, 9) pur une carcasse ; **caractérisé en ce que** le dispositif mobile (30-34) est adapté pour maintenir le couteau (10) selon un angle aigu par rapport à un plan médian vertical (29) dans la carcasse qui est maintenue par le dispositif de retenue (2, 5, 6, 8, 9) et pour déplacer le couteau dans la direction de la pointe ; et le dispositif mobile est également adapté pour faire pivoter le couteau par rapport au dispositif mobile dans une ou plusieurs autres positions angulaires de sorte que la direction longitudinale du couteau (10), à un emplacement où le couteau est mis en prise dans la carcasse, est pivotée selon un autre angle par rapport au plan médian vertical (29) lorsque le couteau est pivoté.

15. Appareil selon la revendication 14, dans lequel le dispositif mobile a des moyens pour le mouvement contrôlable de l'arrière du couteau avec trois degrés de liberté (31, 32, 35) ainsi que des moyens pour provoquer un pivotement (38) du couteau par rapport au dispositif mobile aux autres angles par rapport au plan médian et un mouvement oscillant dans la direction longitudinale (44) du couteau.

16. Appareil selon les revendications 14 ou 15, dans lequel le couteau (10) est monté dans un dispositif mobile de sorte qu'il peut librement tourner autour d'un axe (36) contre une force provenant des moyens de force de rappel (39) qui poussent le couteau contre une position d'arrêt avec un angle aigu maximum.

17. Appareil selon l'une quelconque des revendications 14 à 16, dans lequel le dispositif de retenue comprend des moyens de poussée (9, 14) pour venir en butée contre une ou plusieurs parties fixes dans la tête et/ou le cou à l'intérieur de la carcasse, de préférence l'hypophyse paracondylaire, ainsi qu'un élément de butée (8), si nécessaire, pour supporter l'extérieur de la tête et/ou un élément de préhension pour la mâchoire inférieure.

18. Appareil selon la revendication 17, comprenant des moyens pour déterminer la position des moyens de poussée (9, 14) et moyennant quoi on prévoit un dispositif de contrôle, lequel dispositif est adapté pour contrôler le dispositif mobile en fonction de la position des moyens de poussée.

19. Appareil selon l'une quelconque des revendications 14 à 18, comprenant des moyens de dilatation (13) pour l'insertion dans une découpe de cou dans une carcasse maintenue par le dispositif de retenue, et pour pousser les surfaces de coupe (28) dans la découpe de cou et/ou les côtés internes sous-jacents de la carcasse à distance du plan médian vertical.

20. Appareil selon l'une quelconque des revendications 14 à 19, dans lequel le couteau (10) est principalement formé comme une surface cylindrique allongée biseautée (45) entre le bord de coupe (41) et le côté de lame convexe (46).

21. Appareil selon l'une quelconque des revendications 14 à 20, dans lequel le couteau (10) a un axe longitudinal essentiellement rectiligne et de préférence un bord de coupe essentiellement rectiligne (41).

22. Appareil selon l'une quelconque des revendications 14 à 21, dans lequel le couteau (10) est monté dans le dispositif mobile orienté obliquement vers le haut selon un angle fixe de préférence ajustable de 5-35° par rapport à l'horizontale.
